# EUROPÄISCHE PATENTSCHRIFT

(11) **EP 1 194 761 B1**
(45) Veröffentlichungstag und Bekanntmachung des Hinweises auf die Patenterteilung: **08.01.2003**
(21) Anmeldenummer: 00936854.9
(22) Anmeldetag: 02.06.2000
(51) Int. Cl.: G01N 15/08, B01D 65/10

(54) **VERFAHREN ZUR INTEGRITÄTSPRÜFUNG VON FILTEREINHEITEN UND PRÜFEINRICHTUNG ZUR DURCHFUHRUNG DES VERFAHRENS**
METHOD FOR CONDUCTING INTEGRITY TESTING OF FILTER UNITS AND A TESTING DEVICE FOR CARRYING OUT THE METHOD
PROCEDE POUR PRATIQUER DES ESSAIS D'INTEGRITE SUR DES UNITES FILTRANTES ET DISPOSITIF APPROPRIE POUR METTRE LEDIT PROCEDE EN OEUVRE

(30) Priorität: 08.06.1999 DE 19926002
(43) Veröffentlichungstag der Anmeldung: 10.04.2002
(73) Patentinhaber: SARTORIUS AG, 37075 Göttingen (DE)
(72) Erfinder: JORNITZ, Maik, W., D-37083 Göttingen (DE); SPANIER, Hans-Jürgen, D-37136 Waake (DE)
(86) Internationale Anmeldenummer: EP0005050
(87) Internationale Veröffentlichungsnummer: WO00075628

(56) Entgegenhaltungen:
- DE-A- 19 503 311
- DE-C- 4 339 589
- US-A- 4 449 392

## Beschreibung

Die Erfindung betrifft ein Verfahren zur Integritätsprüfung von Filtereinheiten mit hydrophoben Filtermaterialien mittels eines qualitativen Wasserintrusionstests und eine Prüfeinrichtung zur Durchführung des Verfahrens.

Das erfindungsgemäße Verfahren ist anwendbar zur Integritätsprüfung von Filtereinheiten, die in größeren Stückzahlen zum Beispiel für die Belüftung von Laborfermentern, Sterilisatoren, Lyophilisatoren, Steriltanks oder Kleingebinden, wie Glasflaschen oder zur Filtration hydrophober Flüssigkeiten benötigt werden. Derartige Filtereinheiten bestehen aus einem Gehäuse, das durch hydrophobe Filtermaterialien in einen einlaßseitigen und in einen auslaßseitigen (reinseitigen, sterilseitigen) mit Anschlüssen versehenen Gehäuseräumen getrennt ist, so daß das zu filtrierende Medium (Gase, hydrophobe Flüssigkeiten) vom Einlaß zum Auslaß bestimmungsgemäß die Filtermaterialien passieren muß. Dabei werden unerwünschte Stoffe, zum Beispiel Mikroorganismen, vom Filtermaterial zurückgehalten.. Als Filtermaterialien kommen Membranen oder Vliese im Bereich der Ultrafiltration und Mikrofiltration in Frage.
Wasserintrusionstests sind bekannt. Sie dienen der zerstörungsfreien Prüfung der Filtereinheiten auf Integrität, die mit hydrophoben Filtermaterialien, ausgestattet sind. Man nutzt dazu das Bestreben der hydrophoben porösen Filtermaterialien aus, Wasser nicht in die Poren eindringen zu lassen. Wird ein solches Filtermaterial jedoch von einer Seite her mit Wasser beaufschlagt und der Druck erhöht, dringt das Wasser zunächst proportional zum Druck in die Porenstruktur des Filtermaterials ein. Dieser annähernd lineare Bereich wird als Intrusionsbereich bezeichnet. Wird der Druck weiter erhöht, so kommt man an einen Druckwert, ab dem der Wasserfluß exponentiell ansteigt. Das ist der sogenannte Penetrationsbereich. Der entsprechende Druckwert, bei dem das Wasser durch die Poren hindurchbricht, ist material- und porengrößenabhängig und charakterisiert die größten Poren des hydrophoben Filtermaterials. Zur Durchführung des Wasserintrusionstests legt man den Testdruck für das Filtermaterial in den Intrusionsbereich und läßt ihn eine vorgegebene Zeit einwirken. Üblicherweise wird über die Druckabnahme die pro Zeiteinheit in die Porenstruktur des Filtermaterials intrudierte Wassermenge gemessen. Aus dieser Flußrate lassen sich Rückschlüsse ziehen über die Unversehrtheit des Filtermaterials. Während bei intaktem Filtermaterial dieser Volumenstrom sehr klein ist, wird er bei beschädigtem Filtermaterialien entsprechend größer sein. Vom Filterproduzenten werden die Grenzwerte für intakte Filtermaterialien angegeben.
In der DE-PS 39 17 856 C2 werden eine Prüfeinrichtung und ein Verfahren zur Durchführung eines In-line-Wasserintrusionstests beschrieben. Die Prüfeinrichtung besteht aus einem Filtersystem (Filtergehäuse) mit den zu testenden Filtereinheiten, einem pneumatisch und vollautomatisch arbeitenden Filtertestgerät und erforderlichen Leitungen und Absperrorganen. Das Verfahren ist dadurch gekennzeicnet, daß das die Filtereinheiten aufnehmende Filtergehäuse eingangsseitig vollständig mit Wasser gefüllt und anschließend mit Preßluft ein Testdruck von ca. 70% bis 80% des für die Filterelemente typischen Wasserpenetrationsdruckwertes angelegt wird. Nach einer Stabilisierungsphase wird bei geschlossenen Ventilen über einen oberen Anschluß am Filtergehäuse der Druckabfall im Filtersystem bestimmt. Nachteilig ist, daß das Verfahren für eine Prüfung einer größeren Stückzahl von Filtereinheiten zu aufwendig ist, weil die Filtereinheiten jeweils in das Filtergehäuse ein- und ausgebaut werden müssen und der Test relativ viel Zeit beansprucht. Die DE-PS 43 39 589 C1 beschreibt ebenfalls ein quanitatives Verfahren und eine Prüfeinrichtung, bei denen bei der Bestimmung des zum jeweiligen Prüfdruck gehörenden Volumens von einem Gesamtnettovolumen der Prüfeinrichtung ausgegangen wird, das für die Prüfeinrichtung als einrichtungskonstanter Wert nur ein Mal zu ermitteln ist. Zur Vermeidung eines hohen Totvolumens durch lange Druckgasleitungen, die zum Beispiel auf Grund von Temperatureinflüssen zu Fehlerquellen für die Druckmessungen werden können, schlägt die DE-OS 195 03 311 A1 vor, daß ein externer elektrischer Drucksensor an den Anschluß des Filtergehäuses angebracht und über eine elektrische Leitung mit einer Auswerteeinheit meßtechnisch verbunden wird. Nachteilig ist, daß für unterschiedliche Typen von Filtereinheiten entweder das jeweilige Gesamtnettovolumen bestimmt oder ein externer Referenzbehälter als Gesamtnettovolumen verwendet werden muß, wodurch sich der Aufwand erhöht. Nachteilig ist auch, daß mit derartigen Wasserintrusionstests nur dann brauchbare Integritätsaussagen erhalten werden, wenn die Filterfläche der zu prüfenden Filtereinheiten relativ groß ist, weil andernfalls der Druckabfall, der durch das in die Porenstruktur der Filtermaterialien intrudierte Wasser hervorgerufen wird, meßtechnisch nicht mehr mit der erforderlichen Genauigkeit ermittelt werden kann. Erfahrungsgemäß sollten die zu prüfenden Filtereinheiten deshalb eine Filterfläche von mehr als 1000 cm² aufweisen.

Der Erfindung liegt deshalb die Aufgabe zu Grunde, ein Verfahren zur Integritätsprüfung von Filtereinheiten mit hydrophoben Filtermaterialien mittels eines Wasserintrusionstests zu finden, mit dem auch Filtereiheiten mit kleiner Filterfläche in großer Stückzahl einfach und routinemäßig auf Integrität geprüft werden können, sowie eine Prüfeinrichtung zur Durchrührung des Verfahrens vorzuschlagen.

Die Aufgabe wird durch ein Verfahren und eine Prüfeinrichtung mit den Merkmalen der Patentansprüche 1 und 11 gelöst. Vorteilhafte Weiterbildungen der Erfindung werden durch die Kennzeichen der abhängigen Patentansprüche definiert.
Erfindungsgemäß wird ein einfaches Verfahren zur Integritätsprüfung von Filtereinheiten mit hydrophoben Filtermaterialien vorgeschlagen, bei dem es genügt, einen qualitativen Wasserintrusionstest durchzuführen, um unbrauchbare Filtereinheiten zu ermitteln. Dabei ist es nicht erforderlich, bei unbrauchbaren Filtereinheiten mit groben Defekten den gesamten Test bis zu Ende durchzuführen, da derartige Filtereinheiten bereits zu Beginn des Tests erkannt werden. Auf Grund der Durchführung eines qualitativen Wasserintrusionstests ist es nicht erforderlich, Filtereinheiten mit großen Filterflächen einzusetzen, sondern ihre Filterfläche kann weniger als 1000 cm² betragen.

Mit dem Verfahren werden Filtereinheiten mit hydrophoben Filtermaterialien auf Integrität geprüft, bei denen die hydrophoben Filtermaterialien das Gehäuse der Filtereinheit in einen einlaßseitigen und in einen auslaßseitigen Gehäuseraum mit Fluidanschlüssen derart trennen, daß ein zu filtrierendes Fluid vom Einlaß zum Auslaß bestimmungsgemäß die hydrophoben Filtermaterialien passieren muß. Das Verfahren weist dabei die folgenden Schritte auf
a) Verbinden des Einlasses der zu prüfenden Filtereinheit mit einem Druckbehälter, der unter einem Gaspolster mit Testdruck befindliches Wasser enthält, und dessen Testdruck über einen Druckminderer auf einen Wert eingestellt wird, der zwischen 40 und 90 % des für die Filtereinheit typischen Wasserpenetrationsdruckwertes liegt,
b) Öffnen eines ersten Ventils zwischen dem Druckbehälter und dem Einlaß der Filtereinheit zum Eindrücken des Wassers in den einlaßseitigen Gehäuseraum der Filtereinheit, wobei der Testdruck in dem Druckbehälter abnimmt,
c) Bestimmen, ob innerhalb einer vorgegebenen ersten Zeitspanne der Testdruck in dem Druckbehälter durch Nachliefern von Gas über den Druckminderer wieder erreicht wird,
   (Die Größe der ersten Zeitspanne ist abhängig von der Konfiguration der Prüfeinrichtung, vom Volumen des Gaspolsters und des eingangsseitigen Gehäuseraums der zu prüfenden Filtereinheit und kann in einfacher Weise vom Fachmann experimentell oder rechnerisch ermittelt werden.)
d) Abbrechen des Tests als nicht bestanden, wenn der Testdruck in der vorgegebenen ersten Zeitspanne nicht erreicht wurde und Durchführen von Schritt g), andernfalls
e) Unterbrechen der Gaszufuhr zum Druckbehälter, wenn der Testdruck nach einer Stabilisierungsphase erreicht ist, durch Schließen eines zweiten Ventils zwischen dem Druckminderer und dem Druckbehälter,
   (Die Stabilisierungsphase beträgt erfahrungsgemäß weniger als 3 Minuten und hängt von der Konfiguration der Filtereinheit und dem Filtermaterial ab. Bei Filtrationseinheiten mit plissierten Filtermaterialien, beispielsweise in Capsulen, ist sie länger als bei Filtrationseinheiten mit Flachfilterlagen.)
f) Bestimmen, ob der Testdruck in dem Druckbehälter innerhalb einer vorgegebenen zweiten Zeitspanne aufrecht erhalten bleibt oder absinkt, wobei ein Absinken bedeutet, daß der Test nicht bestanden wurde,
   (Um sichere und vergleichbare Aussagen zu erhalten wird die zweite Zeitspanne vom Fachmann für jeden Typ der Filtereinheit festgelegt. Es ist ausreichend sie in den Bereich zwischen 0,25 bis 3 Minuten zu legen.)
g) Schließen des ersten Ventils zwischen dem Druckbehälter und dem Einlaß der Filtereinheit und Lösen der Verbindung der geprüften Filtereinheit von dem Druckbehälter.
Es hat sich als komfortabel erwiesen, wenn in einer bevorzugten Ausführungsform des Verfahrens das Nichtbestehen des Tests gemäß der Schritte d) und f) dem Operateur durch ein Signal angezeigt wird.
In einer weiteren Ausführungsform des Verfahrens wird der Einlaß der zu testenden Filtereinheit mit dem Druckbehälter gemäß Schritt a) über eine Andockstelle verbunden. Dabei kann die Andockstelle mit dem Druckbehälter über eine flexible Druckleitung verbunden werden. In einer bevorzugten Ausführungsform der Erfindung wird die zu prüfende Filtereinheit vor ihrer Verbindung mit dem Druckbehälter auf einem Filterhalter arretiert. Das ist insbesondere dann erforderlich, wenn das Verbinden und das Lösen des Einlasses der zu prüfenden Filtereinheit mit dem beziehungsweise von dem Druckbehälter oder der Andockstelle mittels eines Manipulators erfolgen soll. In einer anderen Ausführungsform, bei der eine große Anzahl von Filtereinheiten routinemäßig zu prüfen ist, wird eine Anzahl der zu prüfenden Filtereinheiten auf dem Filterhalter arretiert und nacheinander zur Durchführung der Integritätsprüfung an den Druckbehälter beziehungsweise die Andockstelle angeschlossen. Zweckmäßigerweise wird der Einlaß der zu prüfenden Filtereinheiten nach unten gerichtet. Das hat den Vorteil, daß der einlaßseitige Gehäuseraum vollständig mit Wasser gefüllt wird und sich in ihm keine Gaspuffer bilden können, weil nämlich das gesamte Gas/die gesamte Luft durch die Poren der hydrophoben Filtermaterialien entweichen kann, bevor die Oberfläche der Filtermaterialien vollständig mit Wasser bedeckt wird und diese Wasserschicht als Gas-/Luftsperre wirkt. Außerdem läuft nach Beendigung der Prüfung nach dem Lösen des Einlasses das Wasser selbständig aus dem eingangsseitigen Gehäuseraum heraus. In einer Ausführungsform des Verfahrens werden die Filtereinheiten auf dem Filterhalter derart arretiert, daß die hydrophoben Filtermaterialien eine von der Waagerechten verschiedene Lage einnehmen. In diesem Fall kann der Einlaß der Filtereinheiten auch nach oben gerichtet sein, ohne das sich eine Wassersperrschicht auf der Oberfläche der Filtermaterialien ausbildet, die das vollständige Entweichen des Gases aus dem einlaßseitigen Gehäuseraum verhindern würde. Der Filterhalter wird entweder als Leiste, Scheibe, Paternoster oder Lift ausgebildet und schrittweise so bewegt, daß die jeweils zu prüfende Filtereinheit zu der Andockstelle an den Druckbehälter hin befördert wird. Alternativ kann auch die Andockstelle mittels Manipulator an den Einlaß der feststehenden Filtereinheiten herangeführt werden.
Die Prüfeinrichtung zur Durchführung des Verfahrens ist aus wenigen Bauelementen aufgebaut und besteht aus einem Druckbehälter mit einem Druckmeßgerät und Anschlüssen für eine Zu- und Abführung von Druckgas und Wasser, wobei in dem Druckbehälter Wasser unter einem Gaspolster enthalten ist und der Anschluß für die Zuführung von Druckgas aus einer Druckgasquelle her über einen Druckminderer und ein zweites Ventil und der Anschluß für die Abführung von Wasser über ein erstes Ventil mit einer Andockstelle zum Verbinden eines Einlasses einer zu prüfenden Filtereinheit absperrbar verbunden sind.
In einer bevorzugten Ausführungsform ist das Druckmeßgerät mit einer Einrichtung zum Abgeben eines Signals, vorzugsweise eines optischen und/oder akustischen Signals, verbunden, welches das Nichtbestehen des Tests anzeigt. Zur Besseren Handhabung ist die Andockstelle der Prüfeinrichtung mit dem Druckbehälter über eine flexible Druckleitung verbunden. Die Art der Andockstelle ist zur Art des Einlasses der Filtereinheiten kompatibel ausgebildet, beispielsweise als Ende eines Druckschlauches oder als ein Teil eines Luer-Lok-Verschlusses. Insbesondere für routinemäßige Prüfungen einer Vielzahl von Filtereinheiten ist die Prüfeinrichtung mit einem Filterhalter zur Arretierung der Filtereinheiten ausgerüstet. Die als Leiste, Scheibe, Paternoster oder Lift ausgebildeten Filterhalter werden nach Abschluß des Prüfvorgangs jeder Filtereinheit manuell oder mittels Schrittmotor weiterbewegt, so daß die jeweils neu zu prüfende Filtereinheit zu die Andockstelle des Druckbehälters hin befördert wird, vor allem, damit ein Manipulator die Andockstelle mit dem Einlaß der zu prüfenden Filtereinheiten fluiddicht verbinden und wieder lösen kann. In einer weiteren Ausführungsform der Erfindung ist der Druckbehälter mit einer Überwchungseinrichtung für das Niveau des Wassers im Druckbehälter ausgestattet, damit sichergestellt ist, das ständig ausreichendes Wasser zur Durchführung der Prüfungen im Druckbehälter vorhanden ist. Erforderlichenfalls wird Wasser über einen absperrbaren Anschluß nachgeliefert. Das zur Durchführung der Prüfungen benutzte Wasser soll mindestens RO-Qualität haben (RO steht für Reversosmose). Eine Temperiereinrichtung für das Wasser ist für eine hohe Sicherheit des Testergebnisses von Vorteil.
In einer weiteren Ausführungsform der Erfindung ist die Prüfeinrichtung so ausgerüstet, daß sie eine vollautomatische Durchführung des Prüfverfahrens gestattet. Dazu ist die Prüfeinrichtung mit von einem Computer ansteuerbaren Einheiten bestückt, einschließlich der Ventile, Druckmeßgerät, Überwachungseinrichtung für den Wasservorrat, Manipulator, Filterhalter und Display mit Alarm.

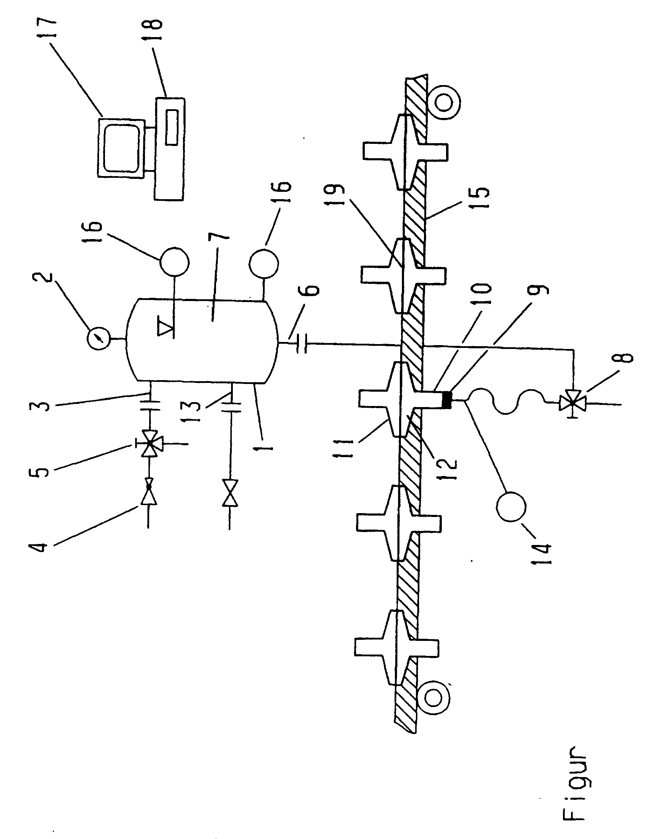

Die Erfindung wird nun an Hand der Figur und des Ausführungsbeispiels näher erläutert. Dabei zeigt die Figur schematisch eine Ausführungsform der erfindungsgemäßen Prüfeinrichtung. An dem Druckbehälter **1** ist ein Druckmeßgerät **2** zur Messung des Testdrucks im Druckbehälter **1**, vorzugsweise über den Gasdruck, installiert. Der Druckbehälter **1** verfügt über einen Anschluß **3** für die Zuführung von Druckgas aus einer Druckgasquelle (nicht dargestellt), die über einen Druckminderer **4** und ein zweites Ventil **5** erfolgt. Das zweite Ventil **5** ist vorzugsweise als Dreiwegeventil ausgebildet, über das ebenfalls Druckgas aus dem Druckbehälter **1** abgelassen werden kann. Darüberhinaus verfügt der Druckbehälter **1** über einen Anschluß **6** für die Abführung von Wasser **7** über ein erstes Ventil **8** mit einer Andockstelle **9** zum Verbinden eines Einlasses **10** einer zu prüfenden Filtereinehit **11**. Das erste Ventil **8** ist vorzugsweise als Dreiwegeventil ausgebildet und dient neben der Zuführung von Wasser **7** in den einlaßseitigen Gehäuseraum **12** der Filtereinheit **11** zum Ablassen des Wassers nach der Durchführung des Verfahrens aus dem einlaßseitigen Gehäuseraum **12** und zur Beschickung des Druckbehälters **1** mit Wasser, weil bei der Durchführung des Wasserintrusionstests Wasser verbraucht wird. Alternativ kann der Druckbehälter **1** mit einem absperrbaren separaten Anschluß **13** zur Zuführung von Wasser **7** ausgestattet sein. Die Andockstelle **9** wird in der dargestellten Ausführungsform mit dem Einlaß **10** mittels eines Manipulators **14** verbunden und gelöst. Eine Vielzahl der Filtereinheiten **11** ist auf einem als Leiste ausgebildeten bewegbaren Filterhalter **15** arretiert. Am Druckbehälter **1** ist eine Überwachungseinheit **16** angebracht, die für eine ausreichende Menge an Wasser in dem Druckbehälter **1** sorgt. Auf einem Display **17** wird das Testergebnis dargestellt Die automatisch arbeitende Prüfeinrichtung ist mit einem Computer **18** ausgerüstet. Die meßtechnische Verbindung mit den ansteuerbaren Einheiten sind der Übersicht halber nicht dargestellt. Die hydrophoben Filtermaterialien der Filtereinheiten **11** sind mit dem Positionszeichen **19** gekennzeichnet.

### Beispiel 1

Für die Durchführung des Verfahrens wird eine Filtereinheit vom Typ Midisart® verwendet (Sartorius AG) mit einem als Flachfilter ausgebildeten Filtermaterial aus einer hydrophoben Membran aus Polytetrafluorethylen (PTFE) (Porengröße von 0,2 µm, Filterfläche von 20 cm²). Die Filtereinheit wird eingangsseitig an den Druckbehälter angeschlossen, der etwa 5 Liter RO-Wasser unter einem Luftpolster von etwa 100 ml unter einem Testdruck von 2500 mbar enthält. Der Wasserpenetrationsdruck liegt für die Filtereinheit bei 5 bar. Durch Öffnen des ersten Ventils zwischen dem Druckbehälter und dem Einlaß der Filtereinheit wird Wasser in den einlaßseitigen Gehäuseraum geströmt. Der Druckminderer ist so eingestellt worden, daß bei der zu prüfenden Filtereinheit nach spätestens 15 Sekunden (die vorgegebene erste Zeitspanne wird mit einer Sicherheitsspanne auf 20 Sekunden festgelegt) der Testdruck von 2500 mbar erreicht sein muß, wenn die Filtereinheit keine groben Defekte aufweist. Es wurde festgestellt, daß dieser Druck nach 20 Sekunden nicht erreicht wird und Wasser aus dem Auslaß der Filtereinheit tropft. Die Filtereinheit hat damit den Test nicht bestanden. Sie wird verworfen.

### Beispiel 2

Das Verfahren wurde unter den analogen Bedingungen wie in Beispiel 1 durchgeführt, jedoch wurde der Testdruck bereits nach 20 Sekunden erreicht. Nach einer Stabilisierungsphase von 30 Sekunden wurde durch Schließen des zweiten Ventils zwischen dem Druckminderer und dem Druckbehälter die Gaszufuhr zum Druckbehälter unterbrochen. Es wurde festgestellt, daß der Testdruck innerhalb einer mit 1 Minute vorgegebenen Zeitspanne absank. Damit wurde der Test nicht bestanden.

### Beispiel 3

Das Verfahren wurde unter den analogen Bedingungen wie in Beispiel 1 durchgeführt, jedoch wurde der Testdruck bereits nach 20 Sekunden erreicht. Nach einer Stabilisierungsphase von 30 Sekunden wurde durch Schließen des zweiten Ventils zwischen dem Druckminderer und dem Druckbehälter die Gaszufuhr zum Druckbehälter unterbrochen. Es wurde festgestellt, daß der Testdruck innerhalb einer mit 1 Minute vorgegebenen Zeitspanne konstant blieb. Damit wurde der Test bestanden.

## Patentansprüche

1. Verfahren zur Integritätsprüfung von Filtereinheiten (11) mit hydrophoben Filtermaterialien (19) mittels eines qualitativen Wasserintrusionstests, wobei die hydrophoben Filtermaterialien (19) das Gehäuse der Filtereinheit (11) in einen einlaßseitigen (12) und in einen auslaßseitigen Gehäuseraum mit Fluidanschlüssen derart trennen, daß ein zu filtrierendes Fluid vom Einlaß (10) zum Auslaß bestimmungsgemäß die hydrophoben Filtermaterialien (19) passieren muß und wobei das Verfahren folgende Schritte aufweist:
a) Verbinden des Einlasses (10) der zu prüfenden Filtereinheit (11) mit einem Druckbehälter (1), der unter einem Gaspolster mit Testdruck befindliches Wasser (7) enthält, und dessen Testdruck über einen Druckminderer (4) auf einen Wert eingestellt wird, der zwischen 40 und 90 % des für die Filtereinheit (11) typischen Wasserpenetrationsdruckwertes liegt,
b) Öffnen eines ersten Ventils (8) zwischen dem Druckbehälter (1) und dem Einlaß (10) der Filtereinheit (11) zum Eindrücken des Wassers in den einlaßseitigen Gehäuseraum (12) der Filtereinheit (11), wobei der Testdruck in dem Druckbehälter (1) abnimmt,
c) Bestimmen, ob innerhalb einer vorgegebenen ersten Zeitspanne der Testdruck in dem Druckbehälter (1) durch Nachliefern von Gas über den Druckminderer (4) wieder erreicht wird,
d) Abbrechen des Tests als nicht bestanden, wenn der Testdruck in der vorgegebenen ersten Zeitspanne nicht erreicht wurde und Durchrühren von Schritt g), andernfalls
e) Unterbrechen der Gaszufuhr zum Druckbehälter (1), wenn der Testdruck nach einer Stabilisierungsphase erreicht ist, durch Schließen eines zweiten Ventils (5) zwischen dem Druckminderer (4) und dem Druckbehälter (1),
f) Bestimmen, ob der Testdruck in dem Druckbehälter (1) innerhalb einer vorgegebenen zweiten Zeitspanne aufrecht erhalten bleibt oder absinkt, wobei ein Absinken bedeutet, daß der Test nicht bestanden wurde,
g) Schließen des ersten Ventils (8) zwischen dem Druckbehälter (1) und dem Druckbehälter (1) und dem Einlaß (10) der Filtereinheit (11) und Lösen der Verbindung der geprüften Filtereinheit (11) von dem Druckbehälter (1).

2. Verfahren nach Anspruch 1, **dadurch gekennzeichnet, daß**
das Nichtbestehen des Tests gemäß der Schritte d) und f) durch ein Signal angezeigt wird.

3. Verfahren nach den Ansprüchen 1 und 2, **dadurch gekennzeichnet, daß**
der Einlaß (10) der zu testenden Filtereinheit (11) mit dem Druckbehälter (1) gemäß Schritt a) über eine Andockstelle (9) verbunden wird.

4. Verfahren nach Anspruch 3, dadurch gekenneichnet, daß
die Andockstelle (9) mit dem Druckbehälter (1) über eine flexible Druckleitung verbunden wird.

5. Verfahren nach den vorstehenden Ansprüchen, **dadurch gekennzeichnet, daß**
die zu prüfende Filtereinheit (11) vor ihrer Verbindung mit dem Druckbehälter (1) auf einem Filterhalter (15) arretiert wird.

6. Verfahren nach Anspruch 5, **dadurch gekennzeichnet, daß**
eine Vielzahl der zu prüfenden Filtereinheiten (11) auf dem Filterhalter (15) arretiert wird und nacheinander zur Durchführung der Integritätsprüfung gemäß der Schritte a) bis g) an den Druckbehälter (1) angeschlossen werden.

7. Verfahren nach den Ansprüchen 5 und 6, **dadurch gekennzeichnet, daß**
die Filtereinheiten (11) auf dem Filterhalter (15) derart arretiert sind, daß die hydrophoben Filtermaterialien (19) eine von der Waagerechten verschiedene Lage einnehmen.

8. Verfahren nach den Ansprüchen 5 und 6, **dadurch gekennzeichnet, daß**
der Filterhalter (15) als Leiste, Scheibe, Paternoster oder Lift ausgebildet wird.

9. Verfahren nach den Ansprüchen 5 bis 8, **dadurch gekennzeichnet, daß**
der Filterhalter (15) schrittweise so bewegt wird, daß die jeweils zu prüfende Filtereinheit (11) zu der Andockstelle (9) an den Druckbehälter (1) hin befördert wird.

10. Verfahren nach einen der vorstehenden Ansprüche, **dadurch gekennzeichnet, daß**
das Verbinden und das Lösen des Einlasses (10) der zu prüfenden Filtereinheit (11) mit
beziehungsweise von dem Druckbehälter (1) gemäß der Schritte a) und g) mittels eines Manipulators (14) erfolgt.

11. Prüfeinrichtung zur Durchführung des Verfahrens gemäß Anspruch 1 bestehend aus einem Druckbehälter (1) mit einem Druckmeßgerät (2) und mit Anschlüssen für eine Zu- und Abführung von Druckgas (3) und Wasser (6), wobei in dem Druckbehälter (1) Wasser (7) unter einem Gaspolster enthalten ist und der Anschluß für die Zuführung von Druckgas (3) aus einer Druckgasquelle her über einen Druckminderer (4) und ein zweites Ventil (5) und der Anschluß für die Abführung von Wasser (6) über ein erstes Ventil (8) zum Verbinden eines Einlasses (10) einer zu prüfenden Filtereinheit (11) absperrbar verbunden sind, **dadurch gekennzeichnet, dass** die Prüfeinrichtung eine Andockstelle (9) aufweist, über die das erste Ventil (8) mit dem Einlaß (10) der zu prüfenden Filtereinheit (11) lösbar angedockt ist und dass die Prüfeinrichtung über einen Filterhalter (15) verfügt, auf dem eine Vielzahl der zu prüfenden Filtereinheiten (11) arretiert ist und wobei der Filterhalter (15) mit einer Schritteinrichtung ausgerüstet ist, die die jeweils zu prüfende Filtereinheit (11) zu der Andockstelle (9) an den Druckbehälter (1) hin befördert

12. Prüfeinrichtung nach Anspruch 11, **dadurch gekennzeichnet, daß**
das Druckmeßgerät (1) mit einer Einrichtung zum Abgeben eines Signals verbunden ist, welches das Nichtbestehen des Tests anzeigt.

13. Prüfeinrichtung nach Anspruch 11, dadurch gekenneichnet, daß
die Andockstelle (9) mit dem Druckbehälter (1) über eine flexible Druckleitung verbunden ist.

14. Prüfeinrichtung nach den Ansprüchen 14 und 15, **dadurch gekennzeichnet, daß**
die hydrophoben Filtermaterialien (19) der Filtereinheiten (11) durch die Arretierung eine von der Waagerechten verschiedene Lage einnehmen.

15. Prüfeinrichtung nach Anspruch 14, **dadurch gekennzeichnet, daß**
der Filterhalter (15) als Leiste, Scheibe, Paternoster oder Lift ausgebildet ist.

16. Prüfeinrichtung nach Anspruch 11, **dadurch gekennzeichnet, daß**
die Prüfeinrichtung mit einem Manipulator (14) ausgestattet ist, der die Andockstelle (9) mit dem Einlaß (10) der zu prüfenden Filtereinheiten (11) fluiddicht verbindet und löst.

17. Prüfeinrichtung nach Anspruch 11, **dadurch gekennzeichnet, daß**
der Druckbehälter (1) mit einer Überwchungseinrichtung (16) für das Niveau des Wassers (7) im Druckbehälter (1) ausgestattet ist.

18. Prüfeinrichtung nach den vorstehenden Ansprüchen 11 bis 20, **dadurch gekennzeichnet, daß**
die Prüfeinrichtung mit von einem Computer (18) ansteuerbaren Einheiten wie Ventile, (1), Überwachungseinrichtung (16), Manipulator (14) und Filterhalter (15) ausgerüstet ist, welche zur automatischen Durchführung des Verfahrens mit einem Computer (18) verbunden sind.

## Claims

1. Method for testing the integrity of filter units (11) with hydrophobic filter materials (19) by means of a qualitative water intrusion test, wherein the hydrophobic filter materials (19) separate the housing of the filter unit (11) into an inlet housing chamber (12) and an outlet housing chamber both with fluid connections in such a manner that a fluid to be filtered must pass the hydrophobic filter materials (19) in accordance with intention from the inlet (10) to the outlet and wherein the method comprises the following steps:
a) connecting the inlet (10) of the filter unit (11) to be tested with a pressure container (1) which contains water (7) at a test pressure and under a gas cushion and the test pressure of which is set by way of a pressure reducer (4) to a value between 40 and 90% of the water penetration pressure value typical for the filter unit (11),
b) opening of a first valve (8) between the pressure container (1) and the inlet (10) of the filter unit (11) for forcing the water into the inlet housing chamber (12) of the filter unit (11), wherein the test pressure decays in the pressure container (1),
c) determining whether within a predetermined first time period the test pressure in the pressure container (1) is reached again after resupply of gas by way of the pressure reducer (4),
d) breaking off the test as not passed if the test pressure in the predetermined first time period was not reached, and performing step g), otherwise
e) interrupting the gas feed to the pressure container (1), when the test pressure is reached after a stabilisation phase, by closing a second valve (5) between the pressure reducer (4) and the pressure container (1),
f) determining whether the test pressure in the pressure container (1) within a predetermined second time period is maintained or reduces, wherein a reduction signifies that the test was not passed, and
g) closing the first valve (8) between the pressure container (1) and the inlet (10) of the filter unit (11) and releasing the connection of the tested filter unit (11) from the pressure container (1).

2. Method according to claim 1, **characterised in that** failing of the test according to steps d) and f) is indicated by a signal.

3. Method according to claims 1 and 2, **characterised in that** the inlet (10) of the filter unit (11) to be tested is connected with the pressure container (1) according to step a) by way of a docking point (9).

4. Method according to claim 3, **characterised in that** the docking point (9) is connected with the pressure container (1) by way of a flexible pressure line.

5. Method according to the preceding claims, **characterised in that** the filter unit (11) is locked, before connection thereof with the pressure container (1), to a filter holder (15).

6. Method according to claim 5, **characterised in that** a plurality of the filter units (11) to be checked is locked to the filter holder (15) and the units are connected in succession to the pressure container (1) for performance of the integrity test according to steps a) to g).

7. Method according to claims 5 and 6, **characterised in that** the filter units (11) are locked to the filter holder (15) in such a manner that the hydrophobic filter materials (19) adopt a position differing from the horizontal.

8. Method according to claims 5 and 6, **characterised in that** the filter holder (15) is constructed as a strip, disc, paternoster or lift.

9. Method according to claims 5 to 8, **characterised in that** the filter holder (15) is so moved in steps that the respective filter unit (11) to be tested is conveyed forward to the docking point (9) at the pressure container (1).

10. Method according to one of the preceding claims, **characterised in that** the connecting and the releasing of the inlet (10) of the filter unit (11) to be checked with or from the pressure container (1) takes place according to steps a) and b) by means of a manipulator (14).

11. Testing equipment for carrying out the method according to claim 1, consisting of a pressure container (1) with a pressure measuring apparatus (2) and with connections for a feed and discharge of pressure gas (3) and water (6), wherein water (7) is contained in the pressure container (1) under a gas cushion and the connection for the feed of pressure gas (3) from a pressure gas source is closably connected by way of a pressure reducer (4) and a second valve (5) and the connection for the discharge of water (6) is closably connected by way of a first valve (8) for the connecting of an inlet (10) of a filter unit (11) to be tested, **characterised in that** the testing equipment comprises a docking point (9) by way of which the first valve (8) is releasably docked with the inlet (10) of the filter unit (11) to be tested and that the testing equipment has a filter holder (15) on which a plurality of the filter units (11) to be checked is locked and wherein the filter holder (15) is equipped with a stepping device which conveys the respective filter unit (11) to be checked to the docking point (9) at the pressure container (1).

12. Testing equipment according to claim 11, **characterised in that** the pressure measuring apparatus (1) is connected with equipment for delivering a signal which indicates failure of the test.

13. Testing equipment according to claim 11, **characterised in that** the docking point (9) is connected with the pressure container (1) by way of a flexible pressure line.

14. Testing equipment according to claims 14 and 15, **characterised in that** the hydrophobic filter materials (19) of the filter units (11) adopt, through the locking, a position differing from the horizontal.

15. Testing equipment according to claim 14, **characterised in that** the filter holder (15) is constructed as a strip, disc, paternoster or lift.

16. Testing equipment according to claim 11, **characterised in that** the testing equipment is equipped with a manipulator (14) which fluidtightly connects and detaches the docking point (9) with and from the inlet (10) of the filter units (11) to be tested.

17. Testing equipment according to claim 11, **characterised in that** the pressure container (1) is equipped with a monitoring device (16) for the level of the water (7) in the pressure container (1).

18. Testing equipment according to the preceding claims 11 to 20, **characterised in that** the testing equipment is equipped with units, such as valves (1), monitoring device (16), manipulator (14) and filter holder (15), which are controllable by a computer (18) and which for automatic performance of the method are connected with a computer (18).

## Revendications

1. Procédé d'essai d'intégrité d'unités filtrantes (11) comportant des matières filtrantes hydrophobes (19) au moyen d'un test d'intrusion d'eau qualitatif, dans lequel les matières filtrantes hydrophobes (19) séparent le corps de l'unité filtrante (11) en une partie de corps côté entrée (12) et une partie de corps côté sortie avec des raccords de fluide de telle sorte qu'un fluide à filtrer doit traverser de l'entrée (10) à la sortie les matières filtrantes hydrophobes (19) et dans lequel ce procédé présente les phases suivantes consistant à :
a) connecter l'entrée (10) de l'unité filtrante à essayer (11) à un réservoir sous pression (1) qui contient de l'eau (7) se trouvant à la pression de test sous un coussin de gaz et dont la pression de test est réglée au moyen d'un détendeur (4) à une valeur qui se trouve entre 40 et 90 % de la valeur de pression de pénétration d'eau typique pour l'unité filtrante (11),
b) ouvrir une première vanne (8) entre le réservoir sous pression (1) et l'entrée (10) de l'unité filtrante (11) pour l'introduction sous pression de l'eau dans la partie de corps côté entrée (12) de l'unité filtrante (11), faisant baisser la pression de test dans le réservoir sous pression (1),
c) déterminer si, dans un premier laps de temps prédéterminé, la pression de test dans le réservoir sous pression (1) est rétablie par réintroduction de gaz par l'intermédiaire du détendeur (4),
d) interrompre l'essai comme n'étant pas concluant, si la pression de test dans le premier laps de temps prédéterminé n'a pas été atteinte et mettre en oeuvre la phase g), dans le cas contraire,
e) interrompre l'amenée de gaz dans le réservoir sous pression (1) si la pression de test est atteinte après une phase de stabilisation, par fermeture d'une deuxième vanne (5) entre le détendeur (4) et le réservoir sous pression (1),
f) déterminer si la pression de test dans le réservoir sous pression (1) reste maintenue ou baisse au cours d'un deuxième laps de temps prédéterminé, un abaissement signifiant que le test n'a pas été concluant,
g) fermer la première vanne (8) entre le réservoir sous pression (1) et l'entrée (10) de l'unité filtrante (11) et déconnecter l'unité filtrante (11) essayée, du réservoir sous pression (1).

2. Procédé selon la revendication 1, **caractérisé en ce que** la non-réussite du test selon les phases d) et f) est indiquée par un signal.

3. Procédé selon les revendications 1 et 2, **caractérisé en ce que** l'entrée (10) de l'unité filtrante à tester (11) est reliée avec le réservoir sous pression (1) selon la phase a) par l'intermédiaire d'un point de connexion (9).

4. Procédé selon la revendication 3, **caractérisé en ce que** le point de connexion (9) est connecté au réservoir sous pression (1) par une conduite de pression flexible.

5. Procédé selon les revendications précédentes, **caractérisé en ce que** l'unité filtrante à essayer (11) est bloquée avant sa connexion avec le réservoir sous pression (1) sur un porte-filtre (15).

6. Procédé selon la revendication 5, **caractérisé en ce qu'**une pluralité d'unités filtrantes (11) à essayer sont bloquées sur le porte-filtre (15) et sont raccordées les unes après les autres au réservoir sous pression (1), pour la mise en oeuvre de l'essai d'intégrité selon les phases a) à g).

7. Procédé selon les revendications 5 et 6, **caractérisé en ce que** les unités filtrantes (11) sont bloquées sur le porte-filtre (15) de telle sorte que les matières filtrantes hydrophobes (19) prennent une position différente de l'horizontale.

8. Procédé selon les revendications 5 et 6, **caractérisé en ce que** le porte-filtre (15) est conçu en forme de bande, de disque, de paternoster ou de monte-charge.

9. Procédé selon les revendications 5 à 8, dans lequel le porte-filtre (15) est déplacé pas à pas de telle sorte que l'unité filtrante à essayer (11) se trouve déplacée vers le point de connexion (9) au réservoir sous pression (1).

10. Procédé selon l'une quelconque des revendications précédentes, **caractérisé en ce que** la connexion et la déconnexion et de l'entrée (10) de l'unité filtrante à essayer (11) au et à partir du réservoir sous pression (1) ont lieu selon les phases a) et g) au moyen d'un manipulateur (14).

11. Dispositif d'essai pour la mise en oeuvre du procédé selon la revendication 1, constitué d'un réservoir sous pression (1) avec un manomètre (2) et avec des raccords pour une amenée et un enlèvement de gaz comprimé (3) et d'eau (6), dans lequel de l'eau (7) est contenue sous un coussin de gaz dans le réservoir sous pression (1) et le raccord pour l'amenée de gaz comprimé (3) depuis une source de gaz comprimé par l'intermédiaire d'un détendeur (4) et d'une deuxième vanne (5) et le raccord pour l'enlèvement d'eau (6) par l'intermédiaire d'une première vanne (8) pour connecter une entrée (10) d'une unité filtrante à essayer (11) sont connectés de manière à pouvoir être fermés, **caractérisé en ce que** le dispositif d'essai présente un point de connexion (9) par l'intermédiaire duquel la première vanne (8) est connectée de manière amovible avec l'entrée (10) de l'unité filtrante à essayer (11) et disposant d'un porte-filtre (15) sur lequel une pluralité d'unités filtrantes à essayer (11) sont bloquées et dans lequel le porte-filtre (15) est équipé d'un dispositif pas à pas qui déplace à chaque fois l'unité filtrante à essayer (11) vers le point de connexion (9) au réservoir sous pression (1).

12. Dispositif d'essai selon la revendication 11, **caractérisé en ce que** le manomètre (2) est connecté à un dispositif pour l'émission d'un signal qui indique la non-réussite du test.

13. Dispositif d'essai selon la revendication 11, **caractérisé en ce que** le point de connexion (9) est connecté au réservoir sous pression (1) par une conduite de pression flexible.

14. Dispositif d'essai selon les revendications 14 et 15, **caractérisé en ce que** les matières filtrantes hydrophobes (19) des unités filtrantes (11) prennent, du fait du blocage, une position différente de l'horizontale.

15. Dispositif d'essai selon la revendication 14, **caractérisé en ce que** le porte-filtre (15) est conçu en forme de bande, de disque, de paternoster ou de monte-charge.

16. Dispositif d'essai selon la revendication 11, **caractérisé en ce qu'**un manipulateur (14) connecte et déconnecte d'une manière étanche aux fluides le point de connexion (9) à et de l'entrée (10) des unités filtrantes à essayer (11).

17. Dispositif d'essai selon la revendication 11, **caractérisé en ce que** le réservoir sous pression (1) est équipé d'un dispositif de surveillance (16) pour le niveau de l'eau (7) dans le réservoir sous pression (1).

18. Dispositif d'essai selon les revendications 11 à 17, **caractérisé en ce que** le dispositif d'essai est équipé d'unités pouvant être commandées par un ordinateur (18) comme les vannes, le dispositif de surveillance (16), le manipulateur (14) et le porte-filtre (15), qui sont connectés pour la mise en oeuvre automatique du procédé avec un ordinateur (18).
